# FASCICULE DE BREVET EUROPEEN

(11) **EP 1 040 058 B1**
(45) Date de publication et mention de la délivrance du brevet: **24.10.2001**
(21) Numéro de dépôt: 98955653.5
(22) Date de dépôt: 13.11.1998
(51) Int. Cl.: B65G 17/24, B65G 47/24

(54) **DISPOSITIF DE CONVOYAGE DE PRODUITS, NOTAMMENT DE FRUITS, DESTINE A L'ALIMENTATION D'UNE UNITE DE TRI DESDITS PRODUITS**
FÖRDERVORRICHTUNG FÜR PRODUKTE, INSBESONDERE FRÜCHTE, BESTIMMT FÜR DIE ZUFUHR ZU EINER SORTIERVORRICHTUNG SOLCHER PRODUKTE
CONVEYOR DEVICE FOR PRODUCTS, IN PARTICULAR FRUITS, FOR FEEDING A UNIT SORTING SAID PRODUCTS

(30) Priorité: 16.12.1997 FR 9715957
(43) Date de publication de la demande: 04.10.2000
(73) Titulaire: Matériel pour l' Arboriculture Fruitière, 82000 Montauban (FR)
(72) Inventeur: BLANC, Philippe, F-82000 Montauban (FR)
(74) Mandataire: Cabinet BARRE LAFORGUE & associés
(86) Numéro de dépôt international: FR9802427
(87) Numéro de publication internationale: WO9930992

(56) Documents cités:
- EP-A- 0 230 583
- DE-A- 2 643 511
- FR-A- 1 445 689
- FR-A- 2 716 874
- US-A- 4 005 774
- US-A- 5 513 740

## Description

L'invention vise un dispositif de convoyage de produits, notamment de fruits, destiné à l'alimentation d'une unité de tri desdits produits en fonction de critères de sélection prédéterminés.

Les opérations de calibrage de fruits nécessitent d'individualiser ces derniers en vue de permettre leur tri en fonction de critères de sélection tels que poids, aspect colorimétrique... A cet effet, les unités de tri comprennent un convoyeur d'alimentation apte, à partir d'un flot de fruits délivrés en vrac par exemple dans un courant d'eau, à ordonner ces fruits les uns derrière les autres de façon à permettre leur analyse individuelle et leur sélection ultérieures.

Un tel convoyeur d'alimentation est notamment décrit dans le brevet français FR-A-2716874 au nom de la demanderesse et comporte une pluralité de rouleaux montés libre en rotation chacun autour d'un axe de rotation transversal porté par une chaîne sans fin et s'étendant orthogonalement par rapport à cette dernière, lesdits rouleaux étant espacés de façon que deux rouleaux successifs définissent entre eux un logement pour un produit et étant constitués de disques parallèles disposés orthogonalement par rapport à l'axe de rotation.

Selon ce brevet, chaque rouleau est en outre constitué de quatre disques parallèles définissant une surface d'appui des produits de forme concave : deux disques latéraux de même diamètre et deux disques centraux de même diamètre inférieur à celui des disques latéraux.

Il s'est toutefois avéré qu'un tel convoyeur d'alimentation, de même que tous les convoyeurs d'alimentation existant à l'heure actuelle, présentait plusieurs inconvénients. En effet, ces convoyeurs d'alimentation sont dédiés à des fruits de dimensions sensiblement similaires pour lesquelles sont déterminés le diamètre et l'entraxe des rouleaux. De ce fait, dans la pratique, chaque unité de tri est conçue pour effectuer le tri d'un type de fruits donné, sans possibilité d'être utilisée pour d'autres fruits de tailles et/ou de formes différentes.

De plus, les convoyeurs d'alimentation actuels s'avèrent présenter, notamment pour des cadences d'alimentation élevées, un rendement, c'est-à-dire un taux de chargement, relativement peu élevé.

Enfin, les dispositifs de convoyage actuels conduisent également, notamment pour des cadences d'alimentation élevées, à la formation de doublons, consistant en un positionnement de deux fruits entre deux rouleaux, qui conduisent à l'impossibilité de trier de façon sélective lesdits fruits formant les doublons.

Dans la pratique, ces deux derniers inconvénients conduisent à une limitation des cadences d'alimentation de l'unité de tri et donc à des rendements non optimisés de ces dernières.

La présente invention vise à pallier l'ensemble de ces inconvénients et a pour objectif essentiel de fournir un dispositif de convoyage d'alimentation d'une unité de tri présentant une cadence et une fiabilité optimales, et utilisable pour le transport de produits de tailles et/ou de formes très différentes.

A cet effet, l'invention vise un dispositif de convoyage tel que décrit dans le préambule de la présente demande, se caractérisant en ce que :
- chaque rouleau comporte deux disques parallèles espacés d'une distance (d) et de même diamètre, portés par un arbre transversal monté libre en rotation autour de l'axe de rotation,
- il comprend deux glissières fixes latérales disposées symétriquement de part et d'autre des disques des rouleaux, lesdites glissières étant inclinées en direction des disques d'un angle (α) par rapport à un plan (P) passant par l'axe de rotation des rouleaux, et étant disposées chacune de façon à présenter un bord inférieur s'étendant à proximité du disque voisin et de l'arbre transversal de chaque rouleau, et à former une goulette sans fond, de section en forme de V tronqué, de profondeur supérieure au rayon des disques.

Un tel dispositif de convoyage comprend donc des glissières fixes latérales s'étendant de part et d'autre des rouleaux sensiblement jusqu'à l'arbre transversal de ces derniers, et constituant des surfaces d'appui latéral des produits qui, associées à la forme desdits rouleaux composés seulement de deux disques de même diamètre, conduisent à amener les produits à venir se centrer chacun entre deux rouleaux.

Dans la pratique, il s'est avéré qu'une telle conception permet, avec une cadence d'alimentation élevée, d'ordonner les produits les uns à la suite des autres entre les différents rouleaux, avec un taux de remplissage optimal du dispositif de convoyage.

De plus, il s'est également avéré qu'un tel dispositif de convoyage pouvait transporter avec le même rendement et la même fiabilité des produits de tailles et de formes très différentes pouvant notamment varier du simple au triple en ce qui concerne leur taille.

Selon une autre caractéristique de l'invention, chaque glissière est inclinée d'un angle (α) sensiblement compris entre 45° et 48°, cette plage d'angles s'avérant, en effet, le meilleur compromis pour pouvoir assurer le transport de produits de petites tailles, tel que par exemple de l'ordre de 30 à 40 millimètres et également le transport de produits de tailles beaucoup plus importantes, par exemple supérieure à 100 millimètres.

A titre d'exemple préférentiel, notamment destiné à la réalisation de dispositifs de convoyage d'alimentation d'unités de tri de fruits, chaque disque des rouleaux présente un diamètre de l'ordre de 80 à 85 millimètres, lesdits disques étant séparés transversalement d'une distance (d) de l'ordre de 15 à 25 millimètres, et l'entraxe entre les axes de rotation des rouleaux étant de l'ordre de 95 à 105 millimètres. De telles dimensions s'avèrent permettre de transporter des fruits dont la taille peut varier dans une plage sensiblement comprise entre 35 mm et 110 mm.

Le bord inférieur des glissières latérales comporte, en outre préférentiellement, un ourlet extérieur de façon à ne pas présenter une arête vive susceptible d'endommager les produits.

Selon une autre caractéristique de l'invention, le dispositif de convoyage comporte une surface de roulement des rouleaux apte à engendrer une rotation desdits rouleaux autour de leur axe de rotation.

Cet entraînement en rotation des rouleaux conduit, en effet, à parfaire la répartition des produits entre lesdits rouleaux.

De plus, cette surface de roulement des rouleaux consiste avantageusement en une bande sans fin associée à des moyens d'entraînement aptes à l'entraîner avec une vitesse de défilement ajustable. Le fait de pouvoir ajuster la vitesse de défilement de la bande sans fin conduit à permettre de modifier le sens de rotation des rouleaux et leur vitesse de rotation selon l'un ou l'autre sens de rotation. Ainsi, selon la taille et la forme des produits, il est possible de favoriser :
- soit les capacités de chargement du convoyeur en commandant une rotation des rouleaux selon un même sens de rotation que le sens de défilement dudit convoyeur, obtenue avec une vitesse de défilement de la bande inférieure à celle du convoyeur,
- soit les capacités de "dédoublage" du convoyeur en commandant une rotation des rouleaux selon un sens de rotation inverse au sens de défilement dudit convoyeur, obtenue avec une vitesse de défilement de la bande supérieure à celle du convoyeur.

Selon une autre caractéristique de l'invention, le convoyeur présente une portion de trajet horizontal, dite d'analyse, équipée de moyens d'analyse de l'aspect externe des produits, le dispositif de convoyage comportant, au niveau de cette portion de trajet horizontale d'analyse, une surface de roulement des rouleaux apte à engendrer une rotation desdits rouleaux autour de leur axe de rotation.

De plus, cette surface de roulement est avantageusement constituée d'une bande sans fin associée à des moyens d'entraînement aptes à l'entraîner avec une vitesse de défilement supérieure à la vitesse de défilement du dispositif de convoyage. Cette bande sans fin permet ainsi d'entraîner les rouleaux et donc les produits logés entre ces derniers selon un sens de rotation inverse au sens de défilement du convoyeur, ce qui favorise une analyse de la totalité de la surface desdits produits.

Selon une autre caractéristique de l'invention, les glissières sont interrompus sur une longueur prédéterminée le long de la portion de trajet horizontal, en amont des moyens d'analyse.

Cette interruption des glissières permet d'évacuer en vue de son recyclage, un éventuel produit se trouvant en "doublon" entre deux rouleaux.

D'autres caractéristiques, buts et avantages de l'invention ressortiront de la description détaillée qui suit en référence aux dessins annexés qui en représentent, à titre d'exemple non limitatif, un mode de réalisation préférentiel. Sur ces dessins qui font partie intégrante de la présente description :
- la figure 1 est une vue longitudinale schématique d'un dispositif de convoyage conforme à l'invention,
- la figure 2 est une coupe transversale à échelle agrandie par un plan A représentant un des rouleaux de ce dispositif de convoyage,
- la figure 3 est une vue schématique transversale de ce dispositif de convoyage représentant divers types de produits pouvant être transportés,
- la figure 4 est une vue schématique longitudinale partielle de ce dispositif de convoyage représentant également divers types de produits pouvant être transportés,
- et la figure 5 est une vue schématique transversale de ce dispositif de convoyage chargé de produits de petites tailles.

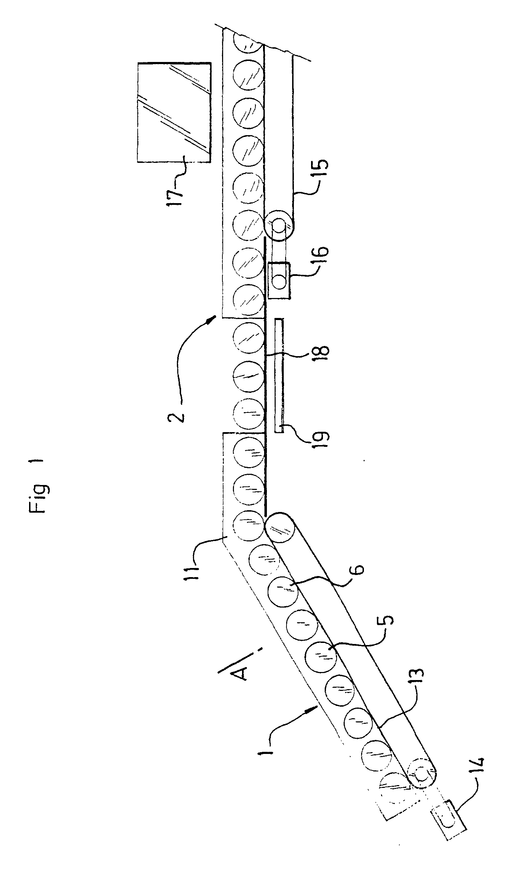

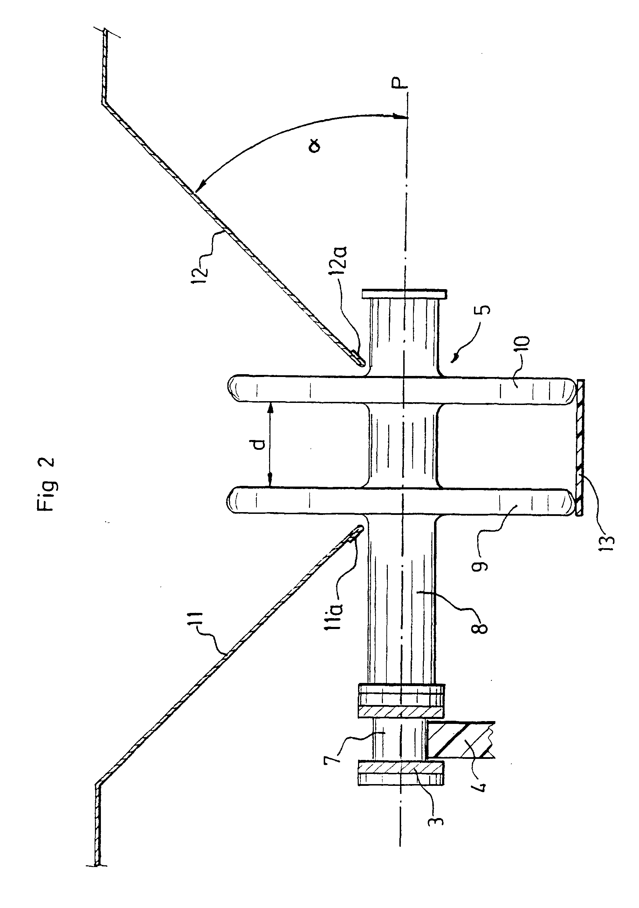

Le dispositif de convoyage représenté aux figures 1 et 2 est destiné à équiper une unité de tri de produits tels que des fruits, telle que notamment décrite dans le brevet français FR-A-2716874 au nom de la demanderesse.

Il comprend une ou plusieurs lignes de convoyage parallèles et identiques, dont une seule est représentée aux figures à titre de simplification, comportant chacune une zone de chargement 1 s'étendant selon une rampe inclinée le long de laquelle les produits sont ordonnés les uns à la suite des autres, et une zone d'analyse optique 2 formée par une portion de trajet horizontal.

Chaque ligne de convoyage comporte une chaîne sans fin 3 supportée par un profilé 4, et une pluralité de rouleaux tels que 5, 6 adaptés pour définir deux à deux des logements pour les produits, montés libres en rotation chacun autour d'un axe de rotation 7 solidaire de la chaîne sans fin 3 et s'étendant transversalement par rapport à celle-ci.

Chaque rouleau 5, 6 se compose d'un arbre transversal creux 8 monté sur l'axe de rotation 7 et de deux disques parallèles 9, 10 de même diamètre s'étendant radialement autour de l'arbre transversal 8. Ces disques 9, 10 présentent, en outre, une tranche biseautée de façon à définir une surface d'appui des produits de forme concave.

De plus, en l'exemple représenté aux figures, les disques 9, 10 sont disposés de façon excentrée par rapport à l'axe de symétrie transversal de l'arbre 8 de façon à pouvoir être montés en lieu et place des rouleaux de l'unité décrite dans le brevet français FR-A-2716874.

A titre d'exemple, les caractéristiques de ces rouleaux 5, 6 sont les suivantes :
- diamètre des disques 9, 10 : 80 mm,
- distance (d) entre deux disques 9, 10 d'un même rouleau 5, 6 : 20 mm,
- entraxe des axes de rotation 7 : 100 mm.

Chaque ligne de convoyage comporte par ailleurs deux glissières fixes latérales 11, 12, disposées de façon à s'étendre longitudinalement, symétriquement de part et d'autre des disques 9, 10 des rouleaux 7, 8. Tel que représenté notamment à la figure 2, ces glissières 11, 12 sont inclinées d'un angle (α) de 45° par rapport à un plan (P) passant par l'axe de rotation 7 des rouleaux 5, 6 de façon à former une goulotte sans fond, de section en forme de V tronqué, dont les bords inférieurs 11a, 12a s'étendent à proximité immédiate des disques 9, 10 et des arbres transversaux 8, et dont la profondeur est égale environ à 1,5 fois le rayon desdits disques.

En outre, les bords inférieurs 11a, 12a des glissières 11, 12 présentent un ourlet externe de façon à éviter tout risque de blesser les produits.

Chaque ligne de convoyage comporte, en outre, au niveau de sa zone de chargement 1, une surface de roulement 13 constituée d'une bande sans fin entraînée au moyen d'un moteur à variateur 14, apte à provoquer la rotation des rouleaux 5, 6 autour de leur axe de rotation 7.

Chaque ligne de convoyage comprend également dans la zone d'analyse optique 2, des moyens d'entraînement en rotation des rouleaux 5, 6 constitués d'une bande sans fin 15 entraînée par un moteur 16, aptes à engendrer une rotation desdits rouleaux en sens inverse du sens de déplacement de ces derniers à l'aplomb de moyens d'analyse optique 17 de tout type connu en soi tels que caméra...

En dernier lieu, tel que représenté à la figure 1, les glissières 11, 12 sont interrompues sur une longueur prédéterminée sur la portion de trajet horizontal de chaque ligne de convoyage, en amont des moyens d'analyse optique 17. De plus, une surface 18 de roulement des rouleaux 5, 6 est disposée au droit de cette zone et un convoyeur transversal 19 de recyclage des produits est disposé sous ladite ligne de convoyage au niveau de cette interruption des glissières 11, 12.

Un tel dispositif de convoyage a pour premier avantage de permettre, avec une cadence d'alimentation élevée, d'ordonner les produits les uns à la suite des autres, chacun entre deux rouleaux 5, 6, avec un taux de remplissage optimal de chaque ligne de convoyage.

De plus, si par accident, deux produits se trouvent logés entre deux rouleaux 5, 6, le produit en déséquilibre se trouve automatiquement évacué au niveau de la zone d'interruption des glissières 11, 12, du fait notamment de la rotation desdits rouleaux 5, 6 au droit de cette zone, et recyclé par l'intermédiaire du convoyeur transversal 19.

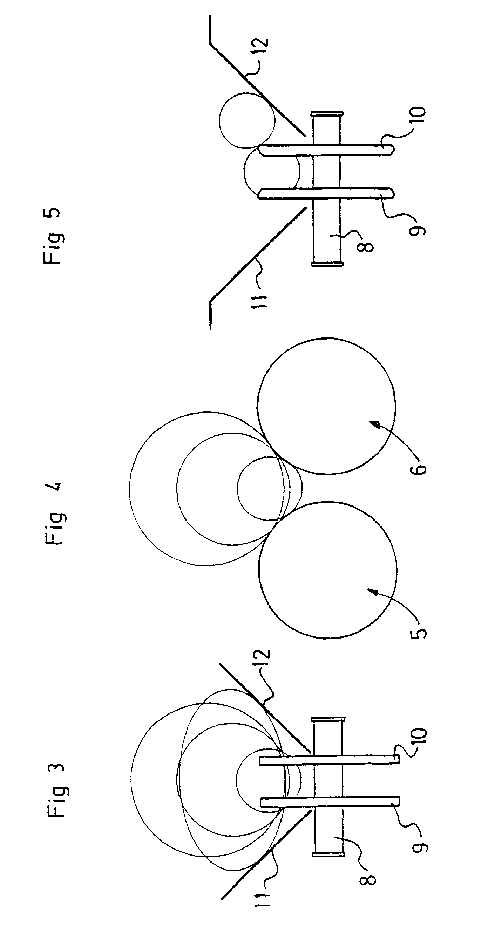

Par ailleurs, tel que représenté aux figures 4 à 6, un tel dispositif de convoyage permet, de par sa conception, de transporter des produits de tailles et de formes (par exemple globalement sphériques ou ovoïdes) très différentes. Dans la pratique, un dispositif de convoyage présentant les caractéristiques dimensionnelles ci-dessus énoncées, permet ainsi de transporter des fruits dont le diamètre varie dans une plage sensiblement comprise entre 35 mm et 110 mm.

De plus, il est à noter que, tel que représenté à la figure 5, dans le cas de petits fruits et lorsque deux fruits viennent se loger entre deux rouleaux 5, 6, un de ces fruits se trouve supporté par une glissière 12, et du fait de la rotation desdits rouleaux, il est amené à venir se loger entre deux rouleaux postérieurs. De ce fait, le dispositif de convoyage conserve ses qualités de rendement et de fiabilité même dans le cas du transport de tels fruits de faibles tailles.

## Revendications

1. Dispositif de convoyage de produits, notamment de fruits, destiné à l'alimentation d'une unité de tri desdits produits, comprenant un convoyeur comportant une pluralité de rouleaux (5, 6) montés libre en rotation chacun autour d'un axe de rotation transversal (7) porté par une chaîne sans fin (3) et s'étendant orthogonalement par rapport à cette dernière, lesdits rouleaux étant espacés de façon que deux rouleaux successifs définissent entre eux un logement pour un produit et étant constitués de disques parallèles (9, 10) disposés orthogonalement par rapport à l'axe de rotation (7), ledit dispositif de convoyage étant **caractérisé en ce que** :
- chaque rouleau (5, 6) comporte deux disques parallèles (9, 10) espacés d'une distance (d) et de même diamètre, portés par un arbre transversal (8) monté libre en rotation autour de l'axe de rotation (7),
- il comprend deux glissières fixes latérales (11, 12) disposées symétriquement de part et d'autre des disques (9, 10) des rouleaux (5, 6), lesdites glissières étant inclinées en direction des disques (9, 10) d'un angle (α) par rapport à un plan (P) passant par l'axe de rotation (7) des rouleaux (5, 6), et étant disposées chacune de façon à présenter un bord inférieur (11a, 12a) s'étendant à proximité du disque (9, 10) voisin et de l'arbre transversal (8) de chaque rouleau (5, 6), et à former une goulette sans fond, de section en forme de V tronqué, de profondeur supérieure au rayon des disques (9, 10).

2. Dispositif de convoyage selon la revendication 1, **caractérisé en ce que** chaque glissière (11, 12) est inclinée d'un angle (α) sensiblement compris entre 45° et 48°.

3. Dispositif de convoyage selon l'une des revendications 1 ou 2, **caractérisé en ce que** le bord inférieur (11a, 12a) de chaque glissière (11, 12) comporte un ourlet extérieur.

4. Dispositif de convoyage selon l'une des revendications 1 à 3, **caractérisé en ce que** chaque disque (9, 10) des rouleaux (5, 6) présente un diamètre de l'ordre de 80 à 85 millimètres, lesdits disques étant séparés transversalement d'une distance (d) de l'ordre de 15 à 25 millimètres, et l'entraxe entre les axes de rotation (7) des rouleaux (5, 6) étant de l'ordre de 95 à 105 millimètres.

5. Dispositif de convoyage selon l'une des revendications précédentes, **caractérisé en ce que** les tranches des disques (9, 10) sont biseautées de façon que les disques de chaque rouleau (5, 6) forment une surface support des produits de forme concave.

6. Dispositif de convoyage selon l'une des revendications précédentes, **caractérisé en ce qu'**il comporte une surface (13) de roulement des rouleaux (5, 6) apte à engendrer une rotation desdits rouleaux autour de leur axe de rotation (7).

7. Dispositif de convoyage selon la revendication 6, **caractérisé en ce que** la surface de roulement (13) des rouleaux (5, 6) consiste en une bande sans fin associée à des moyens d'entraînement (14) aptes à l'entraîner avec une vitesse de défilement ajustable.

8. Dispositif de convoyage selon l'une des revendications précédentes, **caractérisé en ce que** le convoyeur présente une portion de trajet horizontal (2), dite d'analyse, équipée de moyens (17) d'analyse de l'aspect externe des produits, ledit dispositif de convoyage comportant, au niveau de cette portion de trajet horizontale d'analyse (2), une surface (15) de roulement des rouleaux (5, 6) apte à engendrer une rotation desdits rouleaux autour de leur axe de rotation (7).

9. Dispositif de convoyage selon la revendication 8, **caractérisé en ce que** la surface de roulement (15) des rouleaux (5, 6) au niveau de la portion de trajet d'analyse (2) comporte une bande sans fin associée à des moyens d'entraînement (16) aptes à l'entraîner avec une vitesse de défilement supérieure à la vitesse de défilement dudit dispositif de convoyage.

10. Dispositif de convoyage selon l'une des revendications 8 à 10, **caractérisé en ce que** les glissières (11, 12) sont interrompus sur une longueur prédéterminée le long de la portion du trajet horizontal (2), en amont des moyens d'analyse (17).

## Patentansprüche

1. Vorrichtung zur Förderung von Produkten, insbesondere Früchten, bestimmt für die Zufuhr zu einer Sortiervorrichtung für solche Produkte, umfassend einen Förderer, der eine Mehrzahl von Walzen (5, 6) umfasst, die so montiert sind, dass sie jeweils frei um eine transversale Rotationsachse (7) rotieren können, die von einer Endloskette (3) getragen wird und sich orthogonal in Bezug auf diese erstreckt, wobei die genannten Walzen so voneinander beabstandet sind, dass zwei aufeinander folgende Walzen zwischen sich eine Aufnahme für ein Produkt bilden und von zwei parallelen Scheiben (9, 10) gebildet werden, die orthogonal in Bezug auf die Rotationsachse (7) angeordnet sind, wobei die genannte Fördervorrichtung **dadurch gekennzeichnet ist, dass**:
- jede Walze (5, 6) zwei parallele Scheiben (9, 10) aufweist, die einen Abstand (d) voneinander aufweisen und denselben Durchmesser haben und von einem Transversaldorn (8) getragen werden, der so montiert ist, dass er frei um die Rotationsachse (7) rotieren kann;
- sie zwei feste seitliche Gleitschienen (11, 12) aufweist, die symmetrisch auf beiden Seiten der Scheiben (9, 10) der Walzen (5, 6) angeordnet sind, wobei die genannten Gleitschienen in Richtung der Scheiben (9, 10) in einem Winkel (α) in Bezug auf eine Ebene (P) geneigt sind, die durch die Rotationsachse (7) der Walzen (5, 6) verläuft, und die jeweils so angeordnet sind, dass sie einen kleinen Rand (11a, 12a) bilden, der in der Nähe der benachbarten Scheibe (9, 10) und des Transversaldorns (8) jeder Walze (5, 6) verläuft, und so, dass sie eine bodenlose Rutsche mit abgestumpftem V-Querschnitt und einer Tiefe bildet, die größer ist als der Radius der Scheiben (9, 10).

2. Fördervorrichtung nach Anspruch 1, **dadurch gekennzeichnet, dass** jede Gleitschiene (11, 12) in einem Winkel (α) im Wesentlichen zwischen 45° und 48° geneigt ist.

3. Fördervorrichtung nach Anspruch 1 oder 2, **dadurch gekennzeichnet, dass** der kleine Rand (11a, 12a) jeder Gleitschiene (11, 12) einen äußeren Saum aufweist.

4. Fördervorrichtung nach einem der Ansprüche 1 bis 3, **dadurch gekennzeichnet, dass** jede Scheibe (9, 10) der Walzen (5, 6) einen Durchmesser in der Größenordnung von 80 bis 85 mm hat, wobei die genannten Scheiben transversal einen Abstand (d) in der Größenordnung von 15 bis 25 mm haben und wobei der Mittenabstand zwischen den Rotationsachsen (7) der Walzen (5,6) in der Größenordnung von 95 bis 105 mm Liegt.

5. Fördervorrichtung nach einem der vorherigen Ansprüche, **dadurch gekennzeichnet, dass** die Schnittflächen der Scheiben (9, 10) so abgefast sind, dass die Scheiben jeder Walze (5, 6) eine konkave Produktauflagefläche bilden.

6. Fördervorrichtung nach einem der vorherigen Ansprüche, **dadurch gekennzeichnet, dass** sie eine Rolloberfläche (13) der Walzen (5, 6) aufweist, die in der Lage ist, eine Rotation der genannten Walzen um ihre Rotationsachse (7) zu bewirken.

7. Fördervorrichtung nach Anspruch 6, **dadurch gekennzeichnet, dass** die Rollfläche (13) der Walzen (5, 6) aus einem Endlosband in Verbindung mit Antriebsmitteln (14) besteht, die es mit einer einstellbaren Laufgeschwindigkeit antreiben können.

8. Fördervorrichtung nach einem der vorherigen Ansprüche, **dadurch gekennzeichnet, dass** der Förderer einen horizontalen so genannten Prüfstreckenabschnitt (2) aufweist, der mit Mitteln (17) zum Prüfen der äußeren Erscheinung der Produkte versehen ist, wobei die genannte Fördervorrichtung in der Höhe dieses horizontalen Prüfstreckenabschnitts (2) eine Rollfläche (15) der Walzen (5, 6) aufweist, die in der Lage ist, eine Rotation der genannten Walzen um ihre Rotationsachse (7) zu bewirken.

9. Fördervorrichtung nach Anspruch 8, **dadurch gekennzeichnet, dass** die Rollfläche (15) der Walzen (5, 6) in der Höhe des Prüfstreckenabschnitts (2) ein Endlosband in Verbindung mit Antriebsmitteln (16) aufweist, die das Band mit einer Laufgeschwindigkeit antreiben können, die höher ist als die Laufgeschwindigkeit der genannten Fördervorrichtung.

10. Fördervorrichtung nach einem der Ansprüche 8 bis 10, **dadurch gekennzeichnet, dass** die Gleitschienen (11, 12) auf einer vorbestimmten Länge entlang dem horizontalen Streckenabschnitt (2) oberhalb der Prüfmittel (17) unterbrochen sind.

## Claims

1. Device for conveying products, in particular fruits, designed to supply a unit for sorting such products, comprising a conveyor having a plurality of rollers (5, 6), each mounted freely in rotation about a transverse rotational axle (7) carried by an endless chain (3) and extending orthogonally with respect to the latter, the said rollers being spaced so that two successive rollers define a housing between them for a product and consisting of parallel discs (9, 10) disposed orthogonally with respect to the rotational axle (7), the said conveying device being **characterized in that**:
- each roller (5, 6) has two parallel discs (9, 10) spaced by a distance (d) and having the same diameter, carried by a transverse shaft (8) mounted freely in rotation about the rotational axle (7),
- it comprises two fixed lateral slides (11, 12) disposed symmetrically either side of the discs (9, 10) of the rollers (5, 6), the said slides being inclined in the direction of the discs (9, 10) at an angle (α) with respect to a plane (P) passing through the rotational axis (7) of the rollers (5, 6) and each being disposed so as to present a lower edge (11a, 12a) extending close to the adjacent disc (9, 10) and the transverse shaft (8) of each roller (5, 6), and to form a bottomless chute, with a section in the shape of a truncated V, having a depth greater than the radius of the discs (9, 10).

2. Conveying device according to claim 1, **characterized in that** each slide (11, 12) is inclined at an angle (α) substantially comprised between 45° and 48°.

3. Conveying device according to either of claims 1 or 2, **characterized in that** the lower edge (11a, 12a) of each slide (11, 12) has an outer hem.

4. Conveying device according to one of claims 1 to 3, **characterized in that** each disc (9, 10) of the rollers (5, 6) has a diameter of the order of 80 to 85 millimetres, the said discs being separated transversely by a distance (d) of the order of 15 to 25 millimetres, and the distance between the rotational axles (7) of the rollers (5, 6) being of the order of 95 to 105 millimetres.

5. Conveying device according to one of the preceding claims, **characterized in that** the edges of the discs (9, 10) are bevelled so that the discs of each roller (5, 6) form a concave-shaped supporting surface for the products.

6. Conveying device according to one of the preceding claims, **characterized in that** it includes a rolling surface . (13) for the rollers (5, 6) able to produce rotation of the said rollers about their rotational axles (7).

7. Conveying device according to claim 6, **characterized in that** the rolling surface (13) for the rollers (5, 6) consists of an endless belt associated with drive means (14) capable of driving it with an adjustable speed of movement.

8. Conveying device according to one of the preceding claims, **characterized in that** the conveyor has a so-called analytical horizontal portion (2) of its path, equipped with means (17) for analyzing the external appearance of the products, the said conveying device including, in the region of this analytical horizontal portion (2) of its path, a rolling surface (15) for the rollers (5, 6) capable of producing rotation of the said rollers about their rotational axles (7).

9. Conveying device according to claim 8, **characterized in that** the rolling surface (15) of the rollers (5, 6) includes, in the region of the analytical portion (2) of its path, an endless belt associated with drive means (16) capable of driving it with a speed of movement greater than the speed of movement of the said conveying device.

10. Conveying device according to one of claim 8 to 10, **characterized in that** the slides (11, 12) are interrupted over a predetermined length along the horizontal portion (2) of its path, upstream from the means of analysis (17).
